# EUROPÄISCHE PATENTSCHRIFT

(11) **EP 2 952 768 B1**
(45) Veröffentlichungstag und Bekanntmachung des Hinweises auf die Patenterteilung: **18.04.2018**
(21) Anmeldenummer: 15170925.0
(22) Anmeldetag: 06.06.2015
(51) Int. Cl.: F16D 41/12, F16D 41/36, F16D 41/18, F16D 41/32

(54) **UNIDIREKTIONALE DREHMOMENT-KUPPLUNG UND VERFAHREN DAZU**
UNIDIRECTIONAL TORQUE COUPLING AND METHOD FOR SAME
ACCOUPLEMENT A COUPLE UNIDIRECTIONNEL ET PROCEDE ASSOCIE

(30) Priorität: 06.06.2014 DE 102014108087
(43) Veröffentlichungstag der Anmeldung: 09.12.2015
(73) Patentinhaber: Fahl, Ulrich, 79418 Schliengen (DE)
(72) Erfinder: Huber, Friedhelm, 79379 Müllheim (DE)
(74) Vertreter: Tahhan, Nader Isam Mark

(56) Entgegenhaltungen:
- AT-B- 363 221
- DE-A1- 1 575 866
- JP-A- 2000 230 575
- US-A- 1 849 212
- US-A- 5 515 957

## Beschreibung

Die Erfindung betrifft eine unidirektionale Drehmoment-Kupplung und ein Verfahren zu ihrem Betrieb. Insbesondere betrifft die Erfindung eine solche Kupplung mit verbesserten Eigenschaften.

### Stand der Technik und Nachteile

Unidirektionale Drehmoment-Kupplungen dienen der Übertragung von Drehmomenten in nur eine Drehrichtung, wohingegen sie in die andere Richtung keine oder nur deutlich geringere Drehmomente übertragen, also einen so genannten "Freilauf" aufweisen. Solche Vorrichtungen kommen typischerweise in der Antriebstechnik zum Einsatz und sind beispielsweise von nicht permanent angetriebenen Zweirädern bekannt. Während in der Antriebsphase die beispielsweise mittels Muskeln oder eines Motors bereitgestellte Antriebskraft unter Verwendung der Kupplung vom Antrieb auf das Rad übertragen werden soll, soll das Rad in Phasen ohne (oder ohne ausreichenden) Antrieb frei drehen können, und vom stehenden bzw. sich nur langsamer drehenden Antrieb entkoppelt sein ("Rollenlassen").

Derartige Vorrichtungen werden, insbesondere in der Zweiradtechnik, häufig auch vereinfachend als "Freilauf" bezeichnet. Sie sind bei Fahrrädern typischerweise in der Hinterradnabe verbaut. Sie erlauben es, die von den Tretkurbeln über die Kette auf den Zahnkranz aufgebrachten Antriebskräfte auf die Nabe zu übertragen, solange die Winkelgeschwindigkeit des Zahnkranzes gleich der Winkelgeschwindigkeit der Nabe (und somit des Hinterrades) ist. Die Gleichheit wird erreicht, indem in Antriebsrichtung eine mechanische, form-und/oder reibschlüssige Kopplung zwischen Zahnkranz und Nabe bereitgestellt ist. Ist die Winkelgeschwindigkeit des Zahnkranzes hingegen geringer als die Winkelgeschwindigkeit der Nabe, kann sich die Nabe frei drehen, ohne durch den Zahnkranz bzw. die damit verbundenen weiteren Komponenten des Antriebsstrangs gebremst zu werden.

Zur Übertragung des am Zahnkranz anliegenden Drehmoments auf die Nabe werden typischerweise stirnverzahnte Freilaufscheiben verwendet. Diese weisen ein Sägezahnprofil auf und werden mittels Feder- oder Magnetkraft gegeneinander gepresst. Eine der Freilaufscheiben ist mit dem Antrieb (Zahnkranz), die andere mit dem Abtrieb (Nabe) verbunden. In Antriebsrichtung verzahnen sich die beiden Freilaufscheiben, so dass das Drehmoment von der einen auf die andere Scheibe und somit vom Antrieb auf den Abtrieb übertragbar ist. Entgegen der Antriebsrichtung wird eine der beiden Freilaufscheiben, die axial verschiebbar ist, durch das Sägezahnprofil von der anderen Freilaufscheibe weggedrückt, so dass sie durchrutscht und kein Drehmoment mehr übertragbar ist. Dieses Durchrutschen ist häufig mit einem akustisch gut wahrnehmbaren Klicken verbunden.

Die axial bewegliche Freilaufscheibe wird häufig an ihrer umlaufenden Außenfläche mit einem Keilwellenprofil versehen. Dieses greift formschlüssig in eine entsprechend ausgestaltete Verzahnung der Innenseite des Nabenkörpers ein. Dabei muss ein Verkippen und somit Verkanten der beweglichen Freilaufscheibe genauso vermieden werden wie der Eintrag von Partikeln auf das Keilwellenprofil, da dies sonst zu einem Festsitzen der Freilaufscheibe führen kann. So erzeugt die wiederholte axiale Bewegung im Keilwellenprofil Abrieb, welcher einerseits fortlaufend das Spiel erhöht, andererseits zu einem verschmutzungsbedingten Ausfall beitragen kann. Ferner beeinflussen auch ggf. von Außen eindringender Schmutz und die temperaturveränderliche Viskosität des zwingend erforderlichen Schmierstoffs den sicheren Betrieb.

Die Anpresskraft der beiden Zahnscheiben wird ausschließlich durch o.g. Federn und/oder durch Magnetkraft bereitgestellt. Ist sie zu hoch, führt dies zu unnötig hoher Reibung und somit zu einem erhöhten Abrieb des durchrutschenden Freilaufs, verbunden mit einer oft unangenehm hohen Geräuschentwicklung. Ist sie zu schwach, kann ein unerwünschtes Durchrutschen der Verzahnung in Antriebsrichtung die Folge sein. Aufgrund der fortlaufenden Alterung des Freilaufs kann ein solcher durchaus bereits nach wenigen Jahren des normalen Funktionierens plötzlich in Antriebsrichtung durchrutschen und unbrauchbar werden. Dabei sind Verletzungen des Fahrers aufgrund eines solchen Fehlers nicht unwahrscheinlich. Um die Gefahr eines solchen Fehlers zu minimieren wird das Sägezahnprofil mit einem leichten, jedoch aufwändig herzustellenden Hinterschnitt gefertigt, so dass sich die Verzahnungen ineinander ziehen, wenn sich die Kupplung in der Antriebsphase befindet.

Die Patentschrift US 5515957 zeigt eine gattungsgemäße Drehoment-Kupplung.

### Aufgabe der Erfindung und Lösung

Die Aufgabe der Erfindung besteht in der Vermeidung der vorstehend genannten Nachteile des Standes der Technik.
Demnach soll die Erfindung eine unidirektionale Drehmoment-Kupplung bereitstellen, welche die Nachteile, die mit der Verwendung eines an der umlaufenden Außenfläche angeordneten Keilwellenprofils zur Drehmomentübertragung einer axial beweglichen Freilaufscheibe einhergehen, nicht aufweist.
Auch soll die Erfindung eine verbesserte Sicherheit gegen Durchrutschen entgegen der Antriebsrichtung aufweisen, und der Verschleiß bzw. die verschleißbedingte Funktionsbeeinträchtigung sollen vermindert werden.
Die Aufgaben werden durch eine Drehmoment-Kupplung gemäß Hauptanspruch gelöst. Vorteilhafte Ausführungsformen sind den abhängigen Ansprüchen, der Beschreibung sowie den Figuren zu entnehmen.

### Beschreibung

Die unidirektionale Drehmoment-Kupplung (nachfolgend auch kurz "Kupplung") ist grundsätzlich universell einsetzbar, kann aber insbesondere für Fahrzeuge mit nicht-permanentem Antrieb (Fahrrad, Motorrad), bei welchen Antriebs- mit Rollphasen abwechseln, eingesetzt werden. Die Kupplung dient der Übertragung eines in eine Antriebsrichtung bereitgestellten Antriebs-Drehmoments beispielsweise auf ein Rad, wobei entgegen der Antriebsrichtung kein (oder nur ein geringeres, zum Antrieb nicht nutzbares) (z.B. Mitnehm-)Drehmoment übertragbar ist.

Die Kupplung umfasst einen das Antriebs-Drehmoment bereitstellenden Antriebskörper mit einer Rotationsachse, um welche er rotierbar gelagert ist.

Sie umfasst außerdem einen rotationskoaxial angeordneten Abtriebskörper, auf welchen das Antriebs-Drehmoment übertragbar ist. Mit anderen Worten, Antriebs- und Abtriebskörper befinden sich auf derselben Rotationsachse, und ein in Antriebsrichtung wirkendes Drehmoment soll vom Antriebs- auf den Abtriebskörper übertragen werden.

Die Kupplung umfasst ferner eine rotationskoaxial angeordnete Druckscheibe. Diese ist in rotationsaxialer Richtung bewegbar und weist stirnseitig eine zur Übertragung des Antriebs-Drehmoments eingerichtete erste Drehmoment-Übertragungsfläche auf.

Die Kupplung umfasst auch eine Drehmoment-Weiterleitungsvorrichtung, welche entweder zwischen Druckscheibe und Abtriebskörper oder zwischen Druckscheibe und Antriebskörper angeordnet ist, und mit welcher das Antriebs-Drehmoment weiterleitbar ist. Es ist klar, dass die Drehmoment-Weiterleitungsvorrichtung so dimensioniert sein muss, dass sie das Antriebs-Drehmoment tatsächlich weiterleiten kann, ohne beschädigt zu werden.

Je nach konstruktiver Variante koppelt sie zwei unterschiedliche Komponenten miteinander. Ist sie als die Druckscheibe mit dem Abtriebskörper verbindendes Element ausgestaltet, so dient sie dazu, das (im Antriebsfall) vom Antriebskörper auf die erste Drehmoment-Übertragungsfläche der Druckscheibe übertragene und an dieser anliegende Drehmoment an den Abtriebskörper weiterzuleiten (erste Konstruktionsvariante). Ist sie als den Antriebskörper mit der Druckscheibe verbindendes Element ausgestaltet, so dient sie dazu, das (ebenfalls im Antriebsfall) am Antriebskörper anliegende Drehmoment auf die Druckscheibe weiterzuleiten, von deren erster Drehmoment-Übertragungsfläche aus es an den Abtriebskörper übertragen werden kann (zweite Konstruktionsvariante). Mit "Weiterleiten" ist demnach immer der Kraftfluss innerhalb der Drehmoment-Weiterleitungsvorrichtung gemeint, wohingegen mit "Übertragen" immer ein Kraftfluss bezeichnet wird, welcher die erste Drehmoment-Übertragungsfläche (und somit die Druckscheibe) und den mit dieser zusammenwirkenden Körper (je nach Konstruktionsvariante also den Antriebs- oder den Abtriebskörper, s.u.) involviert.

Damit das Antriebs-Drehmoment tatsächlich übertragbar ist, weist diejenige Komponente, welche der ersten Drehmoment-Übertragungsfläche der Druckscheibe in rotationsaxialer Richtung stirnseitig gegenüberliegt (dies kann je nach konstruktiver Variante der Antriebs- oder Abtriebskörper sein) eine zweite Drehmoment-Übertragungsfläche auf. Letztere steht jederzeit in mechanischem Kontakt mit der ersten Drehmoment-Übertragungsfläche, so dass die nicht angetriebene von der angetriebenen Drehmoment-Übertragungsfläche reibschlüssig und/oder formschlüssig mitnehmbar ist, wobei jedoch lediglich ein das Antriebs-Drehmoment unterschreitendes Mitnehm-Drehmoment übertragbar ist. Erst bei Überschreiten eines Mindest-Anpressdruckes kann tatsächlich das Antriebs-Drehmoment übertragen werden. Ist der Mindest-Anpressdruck nicht erreicht, nimmt die angetriebene die nicht angetriebene Drehmoment-Übertragungsfläche zwar mit, das Antriebs-Drehmoment kann jedoch nicht übertragen werden, die Kupplung "rutscht durch".

Erfindungsgemäß ist die Drehmoment-Weiterleitungsvorrichtung dadurch gekennzeichnet, dass sie formstabile (starre) Druckweiterleitungs-Elemente umfasst. Diese stützen sich einerseits an derjenigen Seite ab, die der ersten Drehmoment-Übertragungsfläche der Druckscheibe abgewandt ist ("Rückseite" der Druckscheibe). Sie stützen sich andererseits auch an der dieser (Rück-)Seite gegenüberliegenden Komponente ab; diese Komponente ist je nach konstruktiver Variante der Antriebs- oder der Abtriebskörper. Die Druckweiterleitungs-Elemente liegen demnach an der Druckscheibe und der wie vorstehend beschrieben positionierten Komponente an. Mittels der Druckweiterleitungs-Elemente ist die Druckscheibe rückseitig mit derjenigen Komponente mechanisch verbunden, auf die sie das Antriebs-Drehmoment weiterleiten soll bzw. von der das Antriebs-Drehmoment auf sie weitergeleitet werden soll. Die Übertragung ist gerade aufgrund ihrer Formstabilität möglich; ein nicht starrer Körper wie insbesondere eine Feder wäre demnach für diese Zweck nicht geeignet.

Die Druckweiterleitungs-Elemente werden erfindungsgemäß nur bei einer vom Reib- und/oder Formschluss der Drehmoment-Übertragungsflächen verursachten, zunächst nur geringfügigen, dann vollen, und in Antriebsrichtung weisenden Mitnahme der nicht angetriebenen durch die angetriebene Drehmoment-Übertragungsfläche mit Druckkräften belastet (Antriebsfall), unter denen sie sich nicht (oder nur unwesentlich) verformen. Mit anderen Worten, lediglich in der Antriebsphase sind die Druckweiterleitungs-Elemente druckbelastet, wobei die Druckkräfte sich aus dem Antriebs-Drehmoment, dem radialen Abstand der Druckweiterleitungs-Elemente von der Rotationsachse, sowie der Lage und Form der Druckweiterleitungs-Elemente ergeben. Erfindungsgemäß sind die der Druckweiterleitungs-Elemente so positioniert, dass sie (bzw. ihre Massemittelpunkte) sich bei besagter Druckbelastung (zumindest auch) in rotationsaxialer Richtung entgegen der Druckscheibe bewegen (z.B. Kippen), sich also z.B. Aufrichten und somit auf die Druckscheibe eine in Richtung der zweiten Drehmoment-Übertragungsfläche wirkende Zustellbewegung durchführen.

Typischerweise ist dieser koaxialen Bewegung eine (in axialer Richtung gesehene) tangentiale und/oder radiale Bewegung des Massemittelpunktes überlagert. Das bedeutet, dass der Massemittelpunkt eines Druckweiterleitungs-Elementes durch das besagte Aufrichten auch von der Rotationsachse weg nach außen (radial), und/oder entlang eines zur Rotationsachse koaxialen Kreisbogens (tangential) verlagert wird, je nach Ausrichtung der Längsachse des Druckweiterleitungs-Elementes.

Aufgrund des Aufrichtens und Zustellens, also ihrer Bewegung entgegen der Druckscheibe, pressen sie diese unter Bereitstellung einer koaxial wirkenden Kraft in Richtung der zweiten Drehmoment-Übertragungsfläche. Das Aufrichten und Anpressen ist möglich, da die Druckweiterleitungs-Elemente im wesentlichen unverformbar und an der anderen Komponente abgestützt sind, welche ihrerseits rotationsaxial festgelegt ist, so dass sie sich nicht in deren Richtung bzw. an ihr vorbei bewegen können.

Die koaxial wirkende Kraft ist dabei so hoch, dass der oben angesprochene Mindest-Anpressdruck erreicht oder überschritten und somit das (volle) Antriebs-Drehmoment übertragbar wird; die Kupplung "greift". Im Gegensatz dazu werden bei einer Mitnahme von nicht angetriebener durch angetriebene Drehmoment-Übertragungsfläche entgegen der Antriebsrichtung (Freilauf-Fall) die Druckübertragungs-Elemente - wiederum ohne wesentliche Formänderung - entlastet, so dass sie sich von der Druckscheibe weg bewegen und der Mindest-Anpressdruck unterschritten wird, wodurch auch kein Antriebs-Drehmoment mehr übertragbar ist und der Antriebskörper relativ zum Abtriebskörper im Wesentlichen frei rotierbar ist.
Die erfindungsgemäße Konstruktion verzichtet demnach auf ein aus dem Stand der Technik bekanntes Keilwellen- oder vergleichbares Außenprofil, da vorliegend die Weiterleitung des Drehmoments mittels der Drehmoment-Weiterleitungsvorrichtung und insbesondere den von ihr umfassten Druckweiterleitungs-Elementen erfolgt. Diese richten sich beim Einkuppeln nur geringfügig auf, was in der Drehmoment-Weiterleitungsvorrichtung zu einer vernachlässigbaren Reibung und entsprechend geringem Verschleiß führt. Die eigentliche Kraftübertragung des Antriebs-Drehmoments erfolgt über die beiden Drehmoment-Übertragungsflächen, welche im Vergleich zu ebenfalls aus dem Stand der Technik bekannten Sperrklinken eine deutlich größere Fläche aufweisen, so dass auch hier der Verschleiß minimiert ist. Aufgrund dieser größeren der Übertragung zur Verfügung stehenden Fläche kann die Höhe einzelner, zur Übertragung vorzugsweise verwendeter Zähne geringer als bei Sperrklinken ausfallen, was zu einem geringeren Arbeitshub und somit einem schnelleren Ansprechen der Kupplung führt. Eine Hinterschneidung ist nicht mehr zwingend notwendig, da die axiale Druckkraft, die von den Druckweiterleitungs-Elementen bereitstellbar ist, so hoch sein kann, dass auch Drehmoment-Übertragungsflächen ohne Hinterschneidungen und sogar ohne die von Freiläufen her bekannten Zähne zur Drehmomentübertragung nutzbar sind. Erfindungsgemäß sind der Antriebskörper und der Abtriebskörper in rotationsaxialer Richtung unbeweglich.

Nach einer Ausführungsform der Drehmoment-Kupplung sind die Druckübertragungs-Elemente als Stößel ausgeführt. Stößel sind typischerweise längliche Bauelemente mit zwei Enden.
Im Hinblick auf die oben beschriebene erste Konstruktionsvariante stützen sich die Stößel mit einem antriebsseitigen Ende an der Rückseite der Druckscheibe und mit einem abtriebsseitigen Ende am Abtriebskörper ab.

Im Hinblick auf die oben beschriebene zweite Konstruktionsvariante stützen sich die Stößel sich mit einem antriebsseitigen Ende am Antrieb und mit einem abtriebsseitigen Ende an der Rückseite der Druckscheibe ab.

Dabei sind die Stößel mit ihrer "Wirklinie" im Antriebs-Fall jederzeit, und bevorzugt sowohl im Antriebs- als auch im Freilauf-Fall, entgegen der Antriebsrichtung in einem Aufstellwinkel geneigt. Das bedeutet, dass zumindest im Antriebsfall eine gewisse Neigung der Wirklinien vorhanden ist, die im Freilauffall nicht zwingend vorhanden sein muss, sich jedoch beim Übergang vom Freilauf- in den Antriebsfall selbsttätig einstellt. Dies kann beispielsweise durch Federn oder dergleichen geschehen, worauf weiter unten detailliert eingegangen wird.

Für den Fall der ersten Konstruktionsvariante anders ausgedrückt, weisen die Stößel in rotationsaxialer Richtung, gemessen von der Druckscheibe aus, zumindest im Antriebsfall zur Druckscheibe antriebsseitig einen geringeren Abstand als abtriebsseitig auf. Die Wirklinie kann als eine gedachte Linie angesehen werden, auf welcher die Achse des Stößels verliefe, wenn er beliebig dünn wäre und beliebig kleine Ende aufweisen würde. Bei einem achsensymmetrisch aufgebauten Stößel verläuft die Wirklinie gerade durch die Längsachse des Stößels. Somit besteht zwischen der Längsachse der Wirklinie und sowohl der Druckscheibe als auch dem Abtriebskörper (erste Konstruktionsvariante) bzw. dem Antriebskörper (zweite Konstruktionsvariante) jeweils ein positiver Aufstellwinkel.

Als Folge dieser Neigung vergrößert sich der Aufstellwinkel der Stößel bei Druckbelastung aufgrund der jederzeit vorhandenen Neigung weiter (=Aufrichten); somit pressen die Stößel die Druckscheibe in Richtung der die zweite Drehmoment-Übertragungsfläche aufweisenden Komponente. Auf diese Weise erhöht sich der Anpressdruck der beiden Drehmoment-Übertragungsflächen immer weiter, bis der Mindest-Anpressdruck erreicht oder überschritten ist, ab welchem eine Übertragung des Antriebs-Drehmoments mittels der beiden Drehmoment-Übertragungsflächen möglich ist.

Es ist klar, dass der Aufstellwinkel und die Geometrie der Stößel derart aufeinander abgestimmt sind, dass der sich ergebende Hub zumindest geringfügig größer als die Zahnhöhe einer ggf. vorhandenen Stirnverzahnung der Drehmoment-Übertragungsflächen ist. Für den Fall einer reibschlüssigen Drehmomentübertagung kann der Hub noch geringer ausfallen.

Die Stößel können beispielsweise auch als Plättchen ausgebildet sein, welche sich ebenfalls aufrichten können, aber im Vergleich zu stabförmigen Stößeln größere Flächen an den Enden aufweisen. Solche Plättchen weisen anstelle einer Wirklinie eine "Wirkebene" auf. Es ist klar, dass die Plättchen an einem oder an beiden Enden eine abgerundete form haben können, um in jeder Lage die maximale Anlagefläche bereitzustellen.

Es ist klar, dass die Stößel nicht unbedingt eine lineare und/oder symmetrische Form aufweisen müssen. Sie müssen nur eine Form aufweisen, die zwischen einer eher liegenden und einer eher aufgerichteten Position wechseln kann, wobei die Form in der liegenden Position in rotationsaxialer Richtung gesehen eine geringere Ausdehnung aufweist als in der aufgerichteten Position. Lediglich Kugeln sind demnach für diese Ausführungsform ungeeignet, da sie keine Wirklinie besitzen.

Besonders bevorzugt weisen die Stößel am antriebsseitigen Ende und/oder am abtriebsseitigen Ende einen Kugelkopf auf. Der Kugelkopf muss dabei nicht symmetrisch zur ggf. vorhandenen Längsachse des jeweiligen Stößels liegen. Die zur Abstützung des jeweiligen Endes vorgesehene Abstützfläche weist zur Aufnahme dieses Kugelkopfes eine geeignete Tasche (Gelenkpfanne, Kugelpfanne) auf. Eine der Abstützflächen ist immer die Rückseite der Druckscheibe angeordnet; die andere Abstützfläche befindet sich stirnseitig an der dieser Rückseite gegenüberliegenden Komponente, also entweder dem Abtriebskörper oder dem Antriebskörper.

Auf diese Weise sind die Stößel mit der die erste und/oder die zweite Drehmoment-Übertragungsfläche aufweisenden Komponente kugelgelenkartig verbunden oder zumindest verbindbar. Je nach Ausgestaltung und Lagerung des Kugelgelenks kann dieses nicht nur Druckkräfte aufnehmen, sondern sichert den Stößel gegen Abheben aus der in der Abstützfläche befindlichen Gelenkpfanne. Somit ist eine Einheit gebildet, welche die Druckscheibe mit der ihrer Rückseite gegenüberliegenden Komponente fest verbindet. Ein freies Rotieren der Druckscheibe relativ zur mit ihr verbundenen Komponente ist nicht möglich. Insbesondere sind diese beiden Körper nur geringfügig (z.B. wenige Grad) gegeneinander drehbar. Das durch eine Relativdrehung bewirkte Aufrichten wird gestoppt, wenn die beiden Drehmoment-Übertragungsflächen aneinander anliegen. Je kürzer der mögliche Hub, desto geringer ist die relative Restdrehbarkeit.

Anstatt eines Kugelgelenks kann auch ein Kreuzgelenk oder ein Drehgelenk (Scharnier) Verwendung finden.

Selbstverständlich wird der Hub auch durch den oben beschriebenen Aufstellwinkel beeinflusst; ein Druckübertragungs-Element mit möglichst flach verlaufender Wirklinie richtet sich schneller bzw. bei gleichem Drehwinkel weiter auf als ein solches mit bereits eher steil verlaufender Wirklinie. Im Grenzfall eines Aufstellwinkels von 90 Grad erfolgt kein weiteres Aufrichten; dieser Grenzfall ist demnach immer zu vermeiden.

Ein bevorzugter Aufstellwinkel beträgt weniger als ca. 10 Grad im Freilauffall, und nicht mehr als ca. 30 Grad im Antriebsfall. Besonders bevorzugt ist ein Aufstellwinkel von weniger als ca. 5 Grad im Freilauffall, und von nicht mehr als ca. 10 Grad im Antriebsfall. Am meisten bevorzugt ist ein Aufstellwinkel von weniger als ca. 3 Grad im Freilauffall, und von nicht mehr als ca. 6 Grad im Antriebsfall.

Nach einer weiteren Ausführungsform ist der Abtriebskörper fest mit dem Nabenkörper beispielsweise einer Laufradnabe, und/oder der Antriebskörper fest mit dem Freilaufkörper beispielsweise einer Laufradnabe verbindbar ausgeführt. Mit anderen Worten, der Antriebs- oder der Abtriebskörper sind beispielsweise als einschraubbarer Ring ausgeführt, welcher in den Naben- bzw. Freilaufkörper einer Laufradnabe eingesetzt und mit diesem verbunden werden kann. Der Vorteil dieser Ausführungsform liegt darin begründet, dass die erfindungsgemäße Drehmoment-Kupplung separat herstellbar und anschließend ohne oder mit nur geringfügigen Nacharbeiten in eine vorzugsweise handelsübliche Laufrandnabe einbaubar ist.

Nach einer anderen Ausführungsform ist der Abtriebskörper als Nabenkörper einer Laufradnabe, und/oder der Antriebskörper als Freilaufkörper einer Laufradnabe ausgeführt. Mit anderen Worten, der An- bzw. Abtriebskörper ist einstückig mit dem Freilauf- bzw. Nabenkörper der Laufradnabe ausgebildet. Diese Ausführungsform hat den Vorteil geringeren Gewichts und benötigt weniger Einzelteile.

Für die Drehmoment-Übertragungsflächen kommen grundsätzlich alle aus dem Stand der Technik bekannten, zur reib- und/oder formschlüssigen Übertragung von Drehmomenten geeigneten Oberflächenstrukturen in Betracht. Beispielsweise weist mindestens eine der beiden Drehmoment-Übertragungsflächen eine Stirnverzahnung (Axialverzahnung) auf, wobei ein Hinterschnitt möglich, aber nicht nötig ist. Auch ein symmetrisches oder asymmetrischen Wellenprofil kann zur Drehmomentübertragung genutzt werden. Schließlich kann mindestens eine der Drehmoment-Übertragungsflächen als Reibfläche ausgeführt sein, so dass eine Reibkupplung gebildet ist, die ab dem Erreichen des oben genannten Mindest-Anpressdruckes das Antriebs-Drehmoment übertragen kann.

Wie weiter oben bereits angemerkt, muss erfindungsgemäß sichergestellt sein, dass zumindest im Antriebsfall jederzeit ein mechanischer Kontakt zwischen beiden Drehmoment-Übertragungsflächen vorhanden ist. Dies kann z.B. mittels Schwerkraft geschehen, indem die Rotationsachse in etwa vertikal ausgerichtet und die erste oberhalb der zweiten Drehmoment-Übertragungsfläche positioniert wird, so dass die beiden Drehmoment-Übertragungsflächen aufeinander liegen.

Vorzugsweise ist zur Sicherstellung jedoch ein Mittel zur Annäherung der beiden Drehmoment-Übertragungsflächen vorhanden. Diese kann mittels einer oder mehrerer mechanischer Federn oder mittels magnetischer Kräfte geringen, aber zur Annäherung ausreichend hohen Druck auf die Rückseite der Druckscheibe ausüben; derartige Lösungen sind aus dem Stand der Technik wohlbekannt. Eine oder vorzugsweise mehrere Federn können zwischen der Rückseite der Druckscheibe und der dieser Rückseite gegenüberliegenden Komponente angeordnet und auf Druck belastet sein; anstelle der Druckfedern können auch entsprechend gepolte Magnete eingesetzt werden. Auch der Einsatz sich anziehender Magnete ist, entsprechende Einbaupositionen in den oder nahe der beiden Drehmoment-Übertragungsflächen vorausgesetzt, möglich.

Durch Verwendung eines Mittels zur Annäherung ist es auch möglich, die Wirklinie von Stößeln im Freilauffall flach, also parallel zur Rotationsebene der Komponente, die der Rückseite der Druckscheibe gegenüber liegt, auszurichten. Im Antriebsfall sorgt das Mittel dann dafür, dass sich ein Aufstellwinkel von mehr als 0 Grad einstellt, sofern die sich rotationsaxial bewegende Druckscheibe die an ihr anliegenden Enden der Stößel mitnimmt.

Es ist außerdem denkbar, dass die Sicherstellung mittels Fliehkräften, oder mittels fluidischen Kräften bewirkt wird.

Fluidische Kräfte werden durch Flüssigkeiten ausgeübt, die bei Rotation in geeigneter Weise durch Kanäle strömen und einen auf die Druckscheibe wirkenden Druck aufbauen.

Nachfolgend wird das erfindungsgemäße Verfahren zum Betrieb einer unidirektionalen Drehmoment-Kupplung beschrieben. Die Drehmoment-Kupplung hat einen Antriebskörper wie beispielsweise den Freilauf einer Laufradnabe, einen Abtriebskörper wie beispielsweise den Nabenkörper einer Laufradnabe, eine zu beiden Körpern rotationskoaxial angeordnete und in diese Richtung bewegbare Druckscheibe, und eine Drehmoment-Weiterleitungsvorrichtung, welche entweder zwischen Druckscheibe und Abtriebskörper, oder zwischen Druckscheibe und Antriebskörper angeordnet ist, und jeweils Druckweiterleitungs-Elemente umfasst. Zur Vermeidung von Wiederholungen wird auf die obenstehenden Ausführungen betreffend die erfindungsgemäße Drehmoment-Kupplung verwiesen.

Der Antriebsfall, in dem das Antriebs-Drehmoment übertragen werden soll, ist zunächst durch eine Relativrotation zwischen Antriebskörper und Abtriebskörper in Antriebsrichtung gekennzeichnet. Im Wege dieser in Antriebsrichtung drehenden Rotation mindestens des Antriebskörpers kommt es schließlich zu einem Eingriff der Kupplung, so dass ab dem Zeitpunkt des Eingriffs die Relativrotation zu Null, jedoch nie negativ wird. Anders ausgedrückt, die Winkelgeschwindigkeit des Antriebskörpers ist solange größer als die des ebenfalls in Antriebsrichtung rotierenden Abtriebskörpers, bis die Kupplung im Eingriff ist und beiden Winkelgeschwindigkeiten aufgrund der mechanischen Kopplung gleich werden.

Erfindungsgemäß werden besagte Druckweiterleitungs-Elemente druckbelastet, wodurch sich ihr Massemittelpunkt entgegen der Rückseite der Druckscheibe bewegt, auf welche sie sodann Druck ausüben. Mit anderen Worten, aufgrund einer Druckbelastung ändert sich die Lage und/oder Position der Druckweiterleitungs-Elemente, die sowohl an der Rückseite der Druckscheibe, als auch an der dieser Rückseite gegenüberliegenden Komponente abgestützt sind. Die Verschiebung des Massemittelpunktes kann durch ein Ändern der Position oder der Orientierung erreicht werden, worauf weiter unten noch eingegangen wird. Dabei erfolgt typischerweise auch eine radiale und/oder tangentiale Verlagerung; auf die obenstehenden Ausführungen wird verwiesen.

Die Bewegung entgegen der Rückseite der Druckscheibe resultiert in einer (zumindest auch) rotationsaxialen Bewegung der Druckscheibe in Richtung des Antriebskörpers bzw. des Abtriebskörpers; der (erfindungsgemäß erwünschten) rotationsaxialen Bewegung der Druckscheibe ist typischerweise eine Drehbewegung derselben überlagert.

Die Bewegung führt schließlich zu einer reib- und/oder formschlüssigen Verbindung zwischen einer an der Druckscheibe angeordneten ersten Drehmoment-Übertragungsfläche und einer am Antriebskörper oder am Abtriebskörper angeordneten zweiten Drehmoment-Übertragungsfläche. Durch Anpressen der Druckscheibe mit ihrer ersten Drehmoment-Übertragungsfläche an die zweite Drehmoment-Übertragungsfläche, welche je nach konstruktiver Variante entweder am Antriebskörper angeordnet ist und das Antriebs-Drehmoment bereitstellt, oder am Abtriebskörper angeordnet ist und zur "Ableitung" des Antriebs-Drehmoments dient, wird demnach die Kupplung "eingerückt" und betätigt.

Als Folge davon wird die Relativrotation zu Null, der Antriebskörper nimmt den Abtriebskörper über die Druckscheibe mit, und ein Übertragen des Antriebs-Drehmoments vom Antriebskörper auf die Druckscheibe und von dieser auf den Abtriebskörper ist das Ergebnis. Dabei wird die Druckbelastung auf die Druckweiterleitungs-Elemente ständig aufrechterhalten, so dass diese auch dauerhaft das Andrücken der beiden Drehmoment-Übertragungsflächen sicherstellen. Anders ausgedrückt führt die Druckbelastung zu einer Lageveränderung der Druckweiterleitungs-Elemente, welche schließlich in einer Selbsthemmung (Verkantung) mündet.

Im Gegensatz dazu steht der Freilauffall, der durch eine dauerhafte Relativrotation zwischen Antriebskörper und Abtriebskörper entgegen der Antriebsrichtung gekennzeichnet ist. Mit anderen Worten, die Differenz zwischen der Winkelgeschwindigkeit von An- und Abtriebskörper ist nicht-null und negativ, weist also entgegen der Antriebsrichtung. Anders ausgedrückt, der Antriebskörper steht relativ gesehen still, und lediglich der Abtriebskörper rotiert entgegen der Antriebsrichtung.

Die besagten Druckweiterleitungs-Elemente werden im Freilauffall druckentlastet, wodurch sich ihr Massemittelpunkt von der Rückseite der Druckscheibe weg bewegt, so dass sie auf dieselbe keinen Druck (mehr) ausüben; ggf. wird auch eine radiale und/oder tangentiale Verlagerung rückgängig gemacht. Dies wiederum resultiert in einer rotationsaxialen Vergrößerung der Entfernung der Druckscheibe vom Antriebskörper bzw. vom Abtriebskörper, was zu einem Lösen einer Verbindung zwischen der ersten und zweiten Drehmoment-Übertragungsfläche führt. Die form- und/oder reibschlüssige Verbindung wird getrennt; zumindest so weit, dass das Antriebs-Drehmoment nicht mehr übertragbar ist. Ein Mitnehm-Drehmoment kann weiterhin übertragbar sein, sofern die beiden Drehmoment-Übertragungsflächen einander ohne signifikanten Druck berühren. Somit wird entgegen der Antriebsrichtung kein Antriebs-Drehmoment vom Antriebskörper auf den Abtriebskörper übertragen, sondern An- und Abtriebskörper laufen gegeneinander im Wesentlichen frei.

Nach einer Ausführungsform wird die Bewegung der Massemittelpunkte der Druckweiterleitungs-Elemente bewirkt, indem die Druckweiterleitungs-Elemente eine längliche, also zumindest nicht-kugelartige Form mit einer "Wirklinie" aufweisen. Sie können beispielsweise die Form von länglichen Stößeln haben, auf die obigen Ausführungen wird in diesem Zusammenhang verwiesen.

Ferner sind die Stößel, in Antriebsrichtung gesehen, sowohl an der Rückseite der Druckscheibe als auch der dieser Rückseite gegenüberliegenden Komponente festgelegt. Das bedeutet, dass die Druckweiterleitungs-Elemente bei einer in Antriebsrichtung verlaufenden Relativrotation zwischen Antriebskörper und Abtriebskörper zu einem Verklemmen führen, so dass die beiden Körper schließlich nicht mehr gegeneinander rotiert werden können. Da die Druckweiterleitungs-Elemente eine längliche Form aufweisen und in Antriebsrichtung abgestützt sind, richten sie sich bei Druckbelastung auf und beanspruchen in rotationsaxialer Richtung mehr Raum. Es ist klar, dass die Druckweiterleitungs-Elemente vorzugsweise derart (vor-)geneigt sind, dass sie sich bei Druckbeanspruchung weiter aufrichten. Würde ihre "Wirklinie" parallel zur Rückseite der Druckscheibe verlaufen, würden sie zwar Druckkräfte aufnehmen, sich jedoch nicht aufzurichten suchen. Daher muss zwischen ihrer Wirklinie und der Druckscheibe jederzeit zumindest ein geringfügiger Aufstellwinkel vorhanden sein, der sich bei Druckbelastung weiter vergrößert. Alternativ muss ein Mittel zum Annähern vorgesehen sein, welches dafür sorgt, dass zumindest im Antriebsfall besagter Aufstellwinkel vorhanden ist, auch hier wird auf obige Ausführungen verwiesen.

Für den Fall einer (in axialer Richtung gesehenen) lediglich radial verlaufenden Wirklinie wird sich der Massemittelpunkt axial und außerdem radial verlagern. Für den Fall einer lediglich tangential verlaufenden Wirklinie wird sich der Massemittelpunkt axial und außerdem tangential verlagern. Ansonsten erfolgt typischerweise eine Kombination dieser Bewegungen (radiale und tangentiale Komponente der Wirklinie).

Wie dargelegt, löst die Erfindung die aus dem Stand der Technik bekannten, eingangs genannten Probleme. Auf ein an der umlaufenden Außenfläche der Druckscheibe angeordnetes Keilwellenprofil kann verzichtet werden. Die Sicherheit gegen Durchrutschen der Drehmoment-Kupplung entgegen der Antriebsrichtung wird verbessert, und der Verschleiß bzw. die verschleißbedingte Funktionsbeeinträchtigung werden vermindert.

### Figurenbeschreibung

Nachfolgend werden beispielhafte Ausführungsformen der Erfindung anhand der Figuren erläutert.
- **Figur 1**: zeigt eine perspektivische Schnittansicht einer als Freilauf für eine Laufradnabe vorgesehenen Drehmoment-Kupplung.
- **Figur 2**: zeigt Details der Drehmoment-Kupplung.
- **Figur 3**: zeigt eine Ansicht des Abtriebskörpers mit Stößeln.
- **Figur 4**: zeigt eine Ansicht der Rückseite der Druckscheibe.
- **Figur 5**: zeigt die Ansicht eines Antriebskörpers mit einer Variante einer zweiten Drehmoment-Übertragungsfläche.

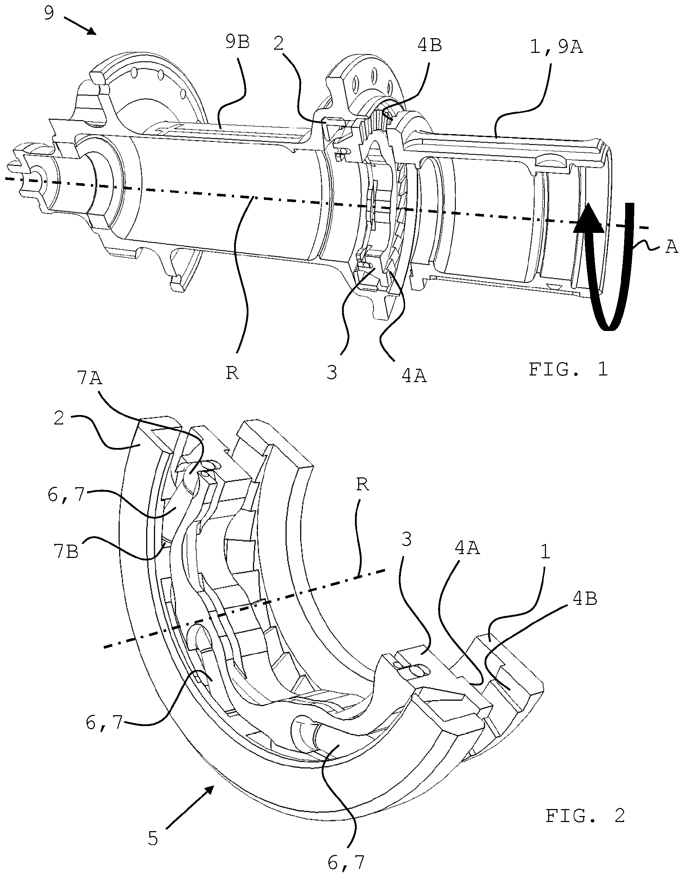

In der **Figur 1** ist eine perspektivische Schnittansicht einer als Freilauf für eine Laufradnabe 9 vorgesehenen Drehmoment-Kupplung gezeigt. Der um die Rotationsachse R rotierbare, vorliegend als Freilaufkörper 9A ausgebildete Antriebskörper 1 ist dazu vorgesehen, ein Ritzelpaket (nicht gezeigt) aufzunehmen. Dieses ist mit einer Kette (nicht gezeigt) in Antriebsrichtung A antreibbar. Die Laufradnabe 9 ist ohne Lager, Distanzringe und dergleichen dargestellt. Der rotationskoaxial zum Antriebskörper 1 angeordnete Abtriebskörper 2 ist vorliegend als Einschraubring ausgebildet, der fest mit dem Nabenkörper 9B der Laufradnabe 9 verbunden ist. Zwischen Antriebskörper 1 und Abtriebskörper 2 ist rotationskoaxial eine Druckscheibe 3 positioniert, welche im Gegensatz zu An- und Abtriebskörper 1, 2 rotationsaxial beweglich ist.

Auf der in Richtung des Antriebskörpers 1 weisenden Seite der Druckscheibe 1 ist eine erste Drehmoment-Übertragungsfläche 4A angeordnet. Am ihr zugewandten Ende des Antriebskörpers 1 ist eine zweite Drehmoment-Übertragungsfläche 4B angeordnet. Beide Drehmoment-Übertragungsflächen 4A, 4B tragen vorliegend eine Stirnverzahnung.

Zur besseren Darstellung ist der Antriebskörper 1 von der Druckscheibe 3 distanziert dargestellt. Im Betriebszustand berühren sich die erste Drehmoment-Übertragungsfläche 4A und die zweite Drehmoment-Übertragungsfläche 4B jederzeit zumindest schleifend-reibschlüssig (im Freilauffall) bzw. eingreifendformschlüssig (im Antriebsfall).

In der **Figur 2** sind Details der Drehmoment-Kupplung aus Fig. 1 gezeigt. Die Ansicht erfolgt hierbei schräg aus Sicht des Nabenkörpers 9B (nicht dargestellt). Der Antriebskörper 1 ist zur besseren Darstellung verkürzt dargestellt, so dass im Wesentlichen die zweite Drehmoment-Übertragungsfläche 4B von ihm erkennbar ist.

Dieser gegenüber ist die erste Drehmoment-Übertragungsfläche 4A mit der Druckscheibe 3 angeordnet. Die Druckscheibe 3 ist in rotationsaxialer Richtung nicht festgelegt. Der Antriebskörper 1 ist in dieser Richtung hingegen unbeweglich, da mittels nicht gezeigter Lager fixiert; gleiches gilt für den Abtriebskörper 2, der vorliegend als Einschraubring ausgestaltet ist, um in dem ebenfalls in rotationsaxialer Richtung festgelegten Nabenkörper 9B (nicht gezeigt) fixiert werden zu können.

Zwischen der Rückseite der Druckscheibe 3 und der ihr zugewandten Seite des Abtriebskörpers 2 sind Druckweiterleitungs-Elemente 6 gleichverteilt angeordnet. Diese sind vorliegend als Stößel 7 ausgebildet. Sie sind an ihrem antriebsseitigen Ende 7A und an ihrem abtriebsseitigen Ende 7B kugelsegmentförmig aufgebaut. Diese Enden 7A, 7B stützen sich in Taschen 8A, 8B (in der Fig. 2 nicht erkennbar) ab, die in der Rückseite der Druckscheibe 3 bzw. in der dieser Rückseite zugewandten Seite des Abtriebskörpers 2 angeordnet sind. Mit einem Sprengring sind die Stößel 7 antriebsseitig in der Druckscheibe 3 gegen Herausfallen gesichert.

Die Stößel 7 bilden zusammen mit den Taschen 8A, 8B die Drehmoment-Weiterleitungsvorrichtung 5. Da sie bei Rotation des Antriebskörpers 1 in Antriebsrichtung A auf Druck belastet werden und in Antriebsrichtung A festgelegt sind, wird das Antriebs-Drehmoment, sofern es mittels Reib- und/oder Formschluss die beiden Drehmoment-Übertragungsflächen 4A, 4B übertragen wird, von der Rückseite der Druckscheibe 3 über die Taschen 8A, die Druckweiterleitungs-Elemente 6 (Stößel 7) und die Taschen 8B auf den Abtriebskörper 2 weitergeleitet. Es ist klar, dass die Druckweiterleitungs-Elemente 6 starr ausgebildet sein müssen, da andernfalls die Übertragung des typischerweise hohen Antriebsdrehmoments, welches durch die Druckweiterleitungs-Elemente 6 in Form von Druckkräften weitergeleitet wird, nicht möglich wäre.

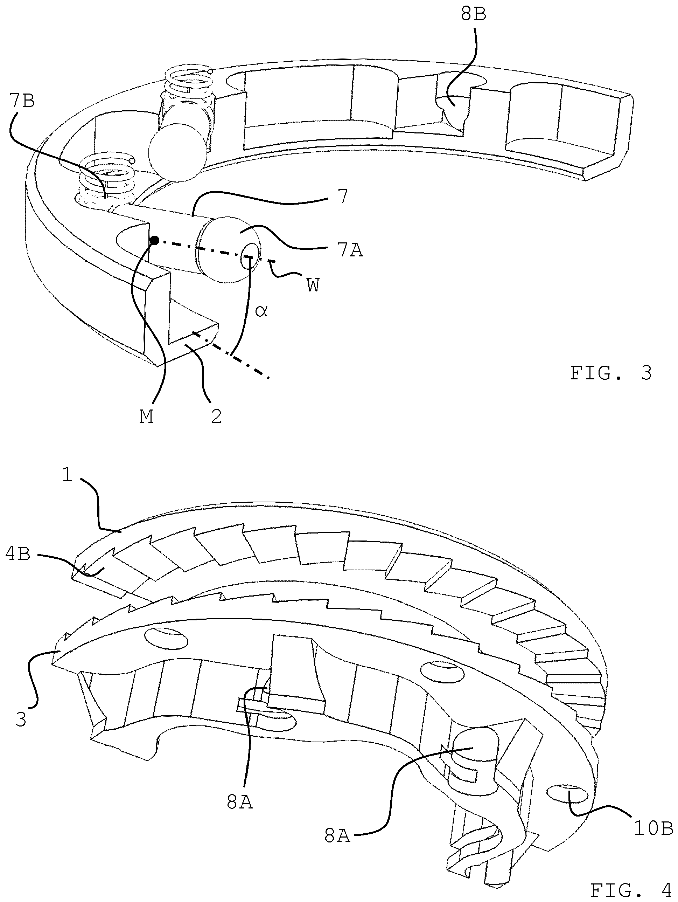

In **Figur 3** ist eine Schnittansicht des dem Zusammenbau aus Fig. 1 entstammenden Abtriebskörpers 2, bestückt mit zwei Stößeln 7 (nur einer mit Bezugszeichen versehen), gezeigt. Gut erkennbar ist das Kugelform aufweisende antriebsseitige Ende 7A. Zur abstützenden Aufnahme des abtriebsseitigen Endes 7B sind entsprechend geformte Taschen 8B angeordnet (nur eine mit Bezugszeichen versehen).

Ebenfalls gut erkennbar ist die Tatsache, dass jeder Stößel 7 einen Aufstellwinkel α aufweist. Dieser wird vorliegend zwischen der Ebene des Einschraubrings und der "Wirklinie" W gemessen. Die Wirklinie W ist die gedachte Linie, auf welche der Stößel bei beliebig kleiner Dicke reduzierbar wäre. Auch andere, nicht gezeigte, anders geformte Körper, mit Ausnahme von Kugeln, haben eine derartige Wirklinie. Nach der gezeigten Ausführungsform verläuft die Wirklinie, in axialer Richtung gesehen, tangential.

Werden die Stößel 7 auf Druck belastet, also in die Taschen 8A, 8B (letztere nicht gezeigt) gedrückt, so suchen sie sich aufgrund der aufwärts (in Richtung der nicht dargestellten Druckscheibe) weisenden Wirklinie W weiter aufzurichten. Dabei wird ihr Massemittelpunkt M in Richtung der Rückseite der Druckscheibe 3 bewegt. Aufgrund der tangentialen Ausrichtung (s.o.) wird ein Aufrichten des Stößels 7 vorliegend nicht nur zu einer axialen, sondern auch einer tangentialen Bewegung seines Massemittelpunktes M führen. Da der Stößel 7 ein starres Gebilde ist, bewegt sich sein antriebsseitiges Ende 7A entsprechend weiter in diese, insbesondere jedoch die axiale Richtung, während das abtriebsseitige Ende 7B in seiner Gelenkpfanne verbleibt, in der es sich dreht. Im Ergebnis weisen die Stößel in rotationsaxialer Richtung, gemessen von der zur Rotationsachse (nicht eingezeichnet) senkrechten Rotationsebene des Abtriebskörpers 2 aus, jederzeit zu dieser Ebene antriebsseitig einen geringeren Abstand als abtriebsseitig auf. Gleichbedeutend damit weisen die Stößel in rotationsaxialer Richtung, gemessen von der nicht dargestellten Druckscheibe aus, jederzeit zur Druckscheibe antriebsseitig einen geringeren Abstand als abtriebsseitig auf.

Die Figur 3 zeigt außerdem einige als Federn ausgebildete Mittel zur Annäherung 10, mit denen der jederzeitige mechanische Kontakt der Druckscheibe 3 mit dem Antriebskörper 1 (jeweils nicht dargestellt) sichergestellt wird. Die Federn stützen sich an den abtriebsseitigen Enden 7B der Stößel 7 ab, so dass diese in die Taschen 8B gedrückt werden. Die im Bild rotationskoaxial nach oben weisenden, frei dargestellten Enden der Federn liegen im zusammengebauten Zustand der Drehmoment-Kupplung an der Rückseite der jederzeit mit dem Abtriebskörper 2 mitdrehenden Druckscheibe 3 an, auf welche sie Druck ausüben.

Die **Figur 4** zeigt eine Ansicht der Rückseite der Druckscheibe 3 und die der Druckscheibe 3 zugwandte Seite des Antriebskörpers 1 mit zweiter Drehmoment-Übertragungsfläche 4B. Andere Komponenten sind aus Gründen der Übersichtlichkeit weggelassen; gut erkennbar sind die Taschen 8A, die sich in der Rückseite der Druckscheibe 3 befinden und an die Geometrie der antriebsseitigen Enden 7A der Stößel 7 (jeweils nicht dargestellt) angepasst sind. Erkennbar sind auch Aufnahmen 10B für die in dieser Fig. nicht gezeigten Federn (nur eine Aufnahme mit Bezugszeichen versehen).

Da sich die Druckscheibe 3 beim Aufrichten der Stößel 7 nur geringfügig relativ zum Abtriebskörper 2 verdreht, kann diese Verdrehung problemlos von den Federn toleriert werden, ohne dass diese aus den Aufnahmen 10B gezogen oder gedrückt werden.

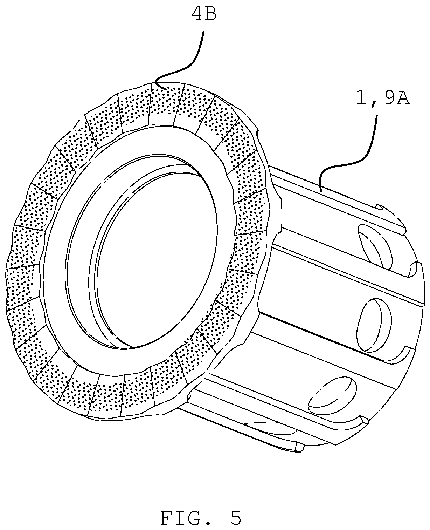

Die **Figur 5** schließlich stellt eine Variante insbesondere der zweiten eines Antriebskörpers mit einer Variante einer zweiten Drehmoment-Übertragungsfläche 4B vor; es ist klar, dass diese mit einer nicht dargestellten, analog ausgebildeten ersten Drehmoment-Übertragungsfläche 4A zusammenwirken sollte. Die gezeigte Ausführungsform weist ein Wellenprofil ohne Hinterschneidungen auf, wobei dasselbe mit einem reibschlüssig wirkenden Oberfläche versehen ist (punktierte Fläche). Somit ist das gezeigte Bauelement zu einer gleichzeitig form- und reibschlüssigen Drehmomentübertragung geeignet.

### Bezugszeichenliste

- 1: Antriebskörper
- 2: Abtriebskörper
- 3: Druckscheibe
- 4A: erste Drehmoment-Übertragungsfläche
- 4B: zweite Drehmoment-Übertragungsfläche
- 5: Drehmoment-Weiterleitungsvorrichtung
- 6: Druckweiterleitungs-Element
- 7: Stößel
- 7A: antriebsseitiges Ende
- 7B: abtriebsseitiges Ende
- 8A, 8B: Tasche
- 9: Laufradnabe
- 9A: Freilaufkörper
- 9B: Nabenkörper
- 10: Mittel zur Annäherung
- 10B: Aufnahme
- 11: Vertiefungen

- A: Antriebsrichtung
- R: Rotationsachse
- α: Aufstellwinkel
- W: Wirklinie
- M: Massemittelpunkt

## Patentansprüche

1. Unidirektionale Drehmoment-Kupplung für Laufradnaben (9) von Fahrrädern als Freilauf zur Übertragung eines in eine Antriebsrichtung (A) bereitgestellten Antriebs-Drehmoments, umfassend
- einen das Antriebs-Drehmoment bereitstellenden Antriebskörper (1) mit einer Rotationsachse (R);
- einen rotationskoaxial angeordneten Abtriebskörper (2), auf welchen das Antriebs-Drehmoment übertragbar ist;
- eine rotationskoaxial angeordnete Druckscheibe (3), welche in rotationsaxialer Richtung bewegbar ist und stirnseitig eine zur Übertragung des Antriebs-Drehmoments eingerichtete erste Drehmoment-Übertragungsfläche (4A) aufweist;
- eine Drehmoment-Weiterleitungsvorrichtung (5), welche zwischen Druckscheibe (3) und Abtriebskörper (2) oder Antriebskörper (1) angeordnet, und mit welcher das Antriebs-Drehmoment weiterleitbar ist;
wobei die der ersten Drehmoment-Übertragungsfläche (4A) gegenüberliegende Komponente (1; 2) eine zweite Drehmoment-Übertragungsfläche (4B) aufweist, die jederzeit in mechanischem Kontakt mit der ersten Drehmoment-Übertragungsfläche (4A) steht, so dass die nicht angetriebene von der angetriebenen Drehmoment-Übertragungsfläche reibschlüssig und/oder formschlüssig mitnehmbar ist, wobei die Drehmoment-Weiterleitungsvorrichtung (5) starre Druckweiterleitungs-Elemente (6) umfasst, welche sich sowohl an der der ersten Drehmoment-Übertragungsfläche (4A) abgewandten Seite der Druckscheibe (3), als auch an der dieser Seite gegenüberliegenden Komponente (1; 2) derart abstützen, dass sie nur bei einer in Antriebsrichtung (A) weisenden Mitnahme der nicht angetriebenen von der angetriebenen Drehmoment-Übertragungsfläche durch Druckkräfte belastet werden, sich dabei in rotationsaxialer Richtung entgegen der Druckscheibe (3) bewegen und diese in Richtung der zweiten Drehmoment-Übertragungsfläche (4B) pressen.
**dadurch gekennzeichnet, dass** der Antriebskörper (1) und der Abtriebskörper (2) in rotationsaxialer Richtung unbeweglich sind.

2. Drehmoment-Kupplung nach Anspruch 1, wobei die Druckübertragungs-Elemente (6) als Stößel (7) ausgeführt sind, welche sich mit einem antriebsseitigen Ende (7A) an der Druckscheibe (3) und mit einem abtriebsseitigen Ende (7B) am Abtriebskörper (2), bzw. sich mit einem antriebsseitigen Ende (7A) am Antrieb (1) und mit einem abtriebsseitigen Ende (7B) an der Rückseite der Druckscheibe (3) abstützen, wobei die Stößel (7) zumindest bei Druckbelastung entgegen der Antriebsrichtung (A) in einem Aufstellwinkel (α) geneigt sind, so dass sich der Aufstellwinkel (α) der Stößel (7) bei Druckbelastung vergrößert und sie die Druckscheibe (3) in Richtung der die zweite Drehmoment-Übertragungsfläche (4B) aufweisenden Komponente (1; 2) pressen.

3. Drehmoment-Kupplung nach Anspruch 2, wobei die Stößel (7) am antriebsseitigen Ende (7A) und/oder am abtriebsseitigen Ende (7B) einen Kugelkopf aufweisen, und wobei die zur Abstützung des jeweiligen Endes (7A, 7B) vorgesehene Abstützfläche zur Aufnahme dieses Kugelkopfes eine geeignete Tasche (8A; 8B) aufweist, so dass die Stößel (7) mit der die erste und/oder die zweite Drehmoment-Übertragungsfläche (4A, 4B) aufweisenden Komponente kugelgelenkartig verbunden oder verbindbar sind.

4. Drehmoment-Kupplung nach einem der Ansprüche 1 bis 3, wobei der Abtriebskörper (2) fest mit dem Nabenkörper (9B) einer Laufradnabe (9), und/oder wobei der Antriebskörper (1) fest mit dem Freilaufkörper (9A) einer Laufradnabe (9) verbindbar ist.

5. Drehmoment-Kupplung nach einem der Ansprüche 1 bis 3, wobei der Abtriebskörper (2) als Nabenkörper (9B) einer Laufradnabe (9), und/oder wobei der Antriebskörper (1) als Freilaufkörper (9A) einer Laufradnabe (9) ausgeführt ist.

6. Drehmoment-Kupplung nach einem der vorhergehenden Ansprüche, wobei die Drehmoment-Übertragungsflächen (4A, 4B) ausgewählt sind aus der Gruppe bestehend aus einer Stirnverzahnung mit und ohne Hinterschnitt, einem symmetrischen und asymmetrischen Wellenprofil, und einer Reibfläche.

7. Drehmoment-Kupplung nach einem der vorhergehenden Ansprüche, wobei der jederzeitige mechanische Kontakt der beiden Drehmoment-Übertragungsflächen (4A, 4B) mittels Schwerkraft, mittels Fliehkraft, mittels fluidischer Kraft, oder durch ein Mittel zur Annäherung (10), welches Federkraft oder magnetische Kraft verwendet, bewirkt wird.

8. Verfahren zum Betrieb einer unidirektionalen Drehmoment-Kupplung für die Laufradnabe (9) eines Fahrrads als Freilauf mit einem in rotationsaxialer Richtung unbeweglichen Antriebskörper (1), einem in rotationsaxialer Richtung unbeweglichen Abtriebskörper (2), einer zu beiden rotationskoaxial angeordneten und in diese Richtung bewegbaren Druckscheibe (3), und einer Drehmoment-Weiterleitungsvorrichtung (5), welche (i) zwischen Druckscheibe (3) und Abtriebskörper (2) oder (ii) zwischen Druckscheibe (3) und Antriebskörper (1) angeordnet ist und starre Druckweiterleitungs-Elemente (6) umfasst, wobei
- im Antriebsfall, der zunächst durch eine Relativrotation zwischen rotationsaxial feststehendem Antriebskörper (1) und rotationsaxial ebenfalls feststehendem Abtriebskörper (2) in Antriebsrichtung (A) gekennzeichnet ist, besagte Druckweiterleitungs-Elemente (6) druckbelastet werden, wodurch sich ihr Massemittelpunkt (M) entgegen der Rückseite der Druckscheibe (3) bewegt, auf welche sie sodann Druck ausüben, resultierend in einer rotationsaxialen Bewegung der Druckscheibe (3) in Richtung (i) des Antriebskörpers (1) bzw. (ii) des Abtriebskörpers (2), was zu einer reib- und/oder formschlüssigen Verbindung zwischen einer an der Druckscheibe (3) angeordneten ersten Drehmoment-Übertragungsfläche (4A) und einer (i) am Antriebskörper (1) bzw. (ii) am Abtriebskörper (2) angeordneten zweiten Drehmoment-Übertragungsfläche (4B) führt, wodurch die Relativrotation zu Null wird, und, unter Aufrechterhaltung der Druckbelastung, das Antriebs-Drehmoment vom Antriebskörper (1) auf die Druckscheibe (3) und von dieser auf den Abtriebskörper (2) übertragen wird, wohingegen
- im Freilauffall, der durch eine dauerhafte Relativrotation zwischen rotationsaxial feststehendem Antriebskörper (1) und rotationsaxial ebenfalls feststehendem Abtriebskörper (2) entgegen der Antriebsrichtung (A) gekennzeichnet ist, besagte Druckweiterleitungs-Elemente (6) druckentlastet werden, wodurch sich ihr Massemittelpunkt (M) von der Rückseite der Druckscheibe (3) weg bewegt, so dass sie auf dieselbe keinen Druck ausüben, resultierend in einer rotationsaxialen Entfernung der Druckscheibe (3) vom (i) Antriebskörper (1) bzw. (ii) Abtriebskörper (2), was zu einem Lösen einer Verbindung zwischen der ersten und zweiten Drehmoment-Übertragungsfläche (4A, 4B) führt, so dass kein Antriebs-Drehmoment vom Antriebskörper (1) auf den Abtriebskörper (2) übertragen wird, sondern An-und Abtriebskörper (1, 2) gegeneinander freilaufen.

9. Verfahren nach Anspruch 8, wobei die Bewegung der Massemittelpunkte (M) der Druckweiterleitungs-Elemente (6) bewirkt wird, indem die Druckweiterleitungs-Elemente (6) eine längliche Form aufweisen und in Antriebsrichtung (A) sowohl an der Rückseite der Druckscheibe (3) als auch der dieser Rückseite gegenüberliegenden Komponente (1; 2) festgelegt sowie derart geneigt sind, dass sie sich bei Druckbelastung aufrichten und in rotationsaxialer Richtung mehr Raum beanspruchen.

## Claims

1. Unidirectional torque coupling for wheel hubs (9) for bicycles as freewheel for transmitting a drive torque which is provided in a drive direction (A), comprising
- a drive body (1) with a rotation axis (R) providing the drive torque;
- a rotation coaxially arranged output side body (2) onto which the drive torque can be transmitted;
- a rotation coaxially arranged pressure disk (3) which is movable in rotation axial direction, and which has a first torque transmission surface (4A) on its face side being arranged for transmission of the drive torque;
- a torque transmission device (5) which is arranged between pressure disk (3) and output side body (2) or drive body (1), and by means of which the drive torque can be transferred;
wherein the component (1; 2) which is opposite to the first torque transmission surface (4A) has a second torque transmission surface (4B) which is permanently in mechanical contact with the first torque transmission surface (4A), such that the non-driven torque transmission surface can be gripped by the driven torque transmission surface by way of form-closed and/or frictional resistance,
wherein the torque transmission device (5) comprises rigid pressure transfer elements (6) which rest against that side of the pressure disk (6) which is opposite to the first torque transmission surface (4A), as well as against the component (1; 2) which is opposite to this side, in such a manner that they are loaded by compressive forces only upon a gripping of the non driven by the driven torque transmission surface which points in drive direction (A), thereby moving in rotation axial direction contrary to the pressure dirk (3), and pressing the same in direction of the second torque transmission surface (4B)
**characterized in that** the drive body (1) and the output side body (2) are immobile in rotation axial direction.

2. Torque coupling according to claim 1, wherein the pressure transfer elements (6) are designed as push rods (7) which rest with a drive side end (7A) against the pressure disk (3) and with an output side end (7B) against the output side body (2), or with a drive side end (7A) against the drive (1) and with an output side end (7B) against the backside of the pressure disk (3), wherein the push rods (7) are inclined at least upon compressive stress in an erecting angle (α) contrary to the drive direction (A), such that the erecting angle (α) of the push rods (7) increases upon compressive stress, pushing the pressure disk (3) in direction of that component (1; 2) which provides the second torque transmission surface (4B).

3. Torque coupling according to claim 2, wherein the push rods have a ball head at their drive side end (7A) and/or at their output side end (7B), and wherein the support area provided for the resting of the respective end (7A, 7B) has a suitable pocket (8A; 8B) for housing this ball head, such that the push rods (7) can be joined or are joinable in a ball joint manner with the component which provides the first and/or second torque transmission surface (4A, 4B).

4. Torque coupling according to any of claims 1 to 3, wherein the output side body (2) is fixedly joinable with the hub body (9B) of a wheel hub (9), and/or wherein the drive body (1) is fixedly joinable with the freewheel body (9A) of a wheel hub (9).

5. Torque coupling according to any of claims 1 to 3, wherein the output side body (2) is designed as the hub body (9B) of a wheel hub (9), and/or wherein the drive body (1) is designed as the freewheel body (9A) of a wheel hub (9).

6. Torque coupling according to any of the preceding claims, wherein the torque transmission surfaces (4A, 4B) are selected from the group consisting of a spur gearing with and without undercut, a symmetric and asymmetric wave profile, and a friction surface.

7. Torque coupling according to any of the preceding claims, wherein the permanent mechanical contact of the two torque transmission surfaces (4A, 4B) is effected by gravity, by means of centrifugal force, by means of fluidic force, or by an approaching means (10) which uses spring force or magnetic force.

8. Method for the operation of an unidirectional torque coupling for the wheel hub (9) of a bicycle as a freewheel, having a drive body (1) which is immobile in a rotation axial direction, an output side body (2) which is immobile in a rotation axial direction, a pressure disk (3) which is arranged rotation coaxially to both, and which is movable in this direction, and with a torque transmission device (5) which is arranged (i) between pressure disk (3) and output side body (2) or (ii) between pressure disk (3) and drive body (1) and which comprises rigid pressure transfer elements (6), wherein
- in the drive case which is firstly **characterized in** a relative rotation between rotation axially immobile drive body (1) and also rotation axially immobile output side body (2) in drive direction (A), said pressure transfer elements (6) are loaded by compressive forces, so that their center of gravity (M) moves contrary to the back side of the pressure disk (3), onto which they then exert pressure, resulting in a rotation axial motion of the pressure disk (3) in direction (i) of the drive body (1) or (ii) the output side body (2), respectively, leading to a frictional and/or form-closed connection between a first torque transmission surface (4A) arranged at the pressure disk (3) and a second torque transmission surface (4B) which is arranged (i) at the drive body (1) or (ii) at the output side body (2), respectively, such that the relative rotation becomes zero, and, while maintaining the compressive load, the drive torque is transmitted from the drive body (1) to the pressure disk (3), and from there, to the output side body (2), whereas
- in the freewheeling case which is **characterized in** a permanent relative rotation between rotation axially immobile drive body (1) and also rotation axially immobile output side body (2) contrary to the drive direction (A), said pressure transfer elements (6) are pressure relieved, so that their center of gravity (M) moves away from the back side of the pressure disk (3), such that they do not exert pressure onto the same, resulting in a rotation axial motion of the pressure disk (3) away from (i) the drive body (1) or (ii) the output side body (2), respectively, resulting in a release of the connection between the first and second torque transmission surface (4A, 4B), so that no drive torque is transmitted from the drive body (1) to the output side body (2), but drive and output side body (1, 2) rotate free with respect to each other.

9. Method according to claim 8, wherein the motion of the centers of gravity (M) of the pressure transfer elements (6) is effected in that the pressure transfer elements (6) have a longitudinal shape and are, in drive direction (A), fixed and inclined in such a manner at the back side of the pressure disk (3) as well as at the component (1; 2) which is arranged opposite to this back side, so that they erect upon compressive load and require more space in rotation axial direction.

## Revendications

1. Accouplement unidirectionnel pour moyeux de roue (9) de bicyclettes en tant que roue libre pour la transmission d'un couple d'entraînement fourni dans une direction d'entraînement (A), comprenant
- un corps d'entraînement (1) fournissant le couple d'entraînement et doté d'un axe de rotation (R) ;
- un corps entraîné (2) disposé de manière coaxiale par rapport à l'axe de rotation, auquel le couple d'entraînement peut être transmis ;
- un disque de pression (3) disposé de manière coaxiale par rapport à l'axe de rotation, qui est mobile dans la direction de l'axe de rotation et comporte côté frontal une première surface de transmission de couple (4A) configurée pour la transmission du couple d'entraînement ;
- un dispositif de transfert de couple (5), qui est disposé entre le disque de pression (3) et le corps entraîné (2) ou le corps d'entraînement (1), et au moyen duquel le couple d'entraînement peut être transféré ;
dans lequel le composant (1 ; 2) faisant face à la première surface de transmission de couple (4A) comporte une seconde surface de transmission de couple (4B), qui est en contact mécanique permanent avec la première surface de transmission de couple (4A), de sorte que la surface de transmission de couple non entraînée peut être entraînée par la surface de transmission de couple entraînée par friction et/ou par complémentarité de forme,
dans lequel le dispositif de transfert de couple (5) comprend des éléments de transfert de pression (6) rigides, qui s'appuient aussi bien sur le côté du disque de pression (3) opposé à la première surface de transmission de couple (4A) que sur le composant (1 ; 2) faisant face à ce côté de telle manière qu'ils sont contraints par des forces de pression uniquement lors d'un entraînement orienté dans la direction d'entraînement (A) de la surface de transmission de couple non entraînée par la surface de transmission de couple entraînée, se déplacent alors dans la direction de l'axe de rotation à l'encontre du disque de pression (3) et pressent celui-ci dans la direction de la seconde surface de transmission de couple (4B),
**caractérisé en ce que** le corps d'entraînement (1) et le corps entraîné (2) sont immobiles dans la direction de l'axe de rotation.

2. Accouplement selon la revendication 1, dans lequel les éléments de transmission de pression (6) se présentent sous la forme de poussoirs (7), qui s'appuient par une extrémité côté entraînement (7A) sur le disque de pression (3) et par une extrémité côté sortie (7B) sur le corps entraîné (2), ou par une extrémité côté entraînement (7A) sur l'entraînement (1) et par une extrémité côté sortie (7B) sur la face arrière du disque de pression (3), les poussoirs (7) étant inclinés selon un angle de redressage (α) à l'encontre de la direction d'entraînement (A) au moins en cas de contrainte de pression, de sorte que l'angle de redressage (α) des poussoirs (7) augmente en cas de contrainte de pression et qu'ils pressent le disque de pression (3) dans la direction du composant (1 ; 2) comportant la seconde surface de transmission de couple (4B).

3. Accouplement selon la revendication 2, dans lequel les poussoirs (7) comportent une tête sphérique sur l'extrémité côté entraînement (7A) et/ou sur l'extrémité côté sortie (7B), et dans lequel la surface d'appui prévue pour l'appui de l'extrémité respective (7A, 7B) comporte une poche (8A ; 8B) adaptée pour recevoir cette tête sphérique, de sorte que les poussoirs (7) sont ou peuvent être reliés au composant comportant la première et/ou la seconde surface de transmission de couple (4A, 4B) par joint à rotule.

4. Accouplement selon l'une des revendications 1 à 3, dans lequel le corps entraîné (2) peut être relié fixement au corps de moyeu (9B) d'un moyeu de roue (9), et/ou le corps d'entraînement (1) peut être relié fixement au corps de roue libre (9A) d'un moyeu de roue (9).

5. Accouplement selon l'une des revendications 1 à 3, dans lequel le corps entraîné (2) se présente sous la forme d'un corps de moyeu (9B) d'un moyeu de roue (9), et/ou le corps d'entraînement (1) se présente sous la forme d'un corps de roue libre (9A) d'un moyeu de roue (9).

6. Accouplement selon l'une des revendications précédentes, dans lequel les surfaces de transmission de couple (4A, 4B) sont choisies dans le groupe constitué d'un engrenage à taille droite avec et sans contre-dépouille, un profil d'arbre symétrique et asymétrique, et une surface de friction.

7. Accouplement selon l'une des revendications précédentes, dans lequel le contact mécanique permanent des deux surfaces de transmission de couple (4A, 4B) est provoqué par la gravité, par force centrifuge, par force fluidique, ou par un moyen de rapprochement (10), qui utilise une force de ressort ou une force magnétique.

8. Procédé de fonctionnement d'un accouplement unidirectionnel pour le moyeu de roue (9) d'une bicyclette en tant que roue libre, comprenant un corps d'entraînement (1) immobile dans la direction de l'axe de rotation, un corps entraîné (2) immobile dans la direction de l'axe de rotation, un disque de pression (3) disposé de manière coaxiale avec ceux-ci par rapport à l'axe de rotation et mobile dans cette direction, et un dispositif de transfert de couple (5), qui est disposé (i) entre le disque de pression (3) et le corps entraîné (2) ou (ii) entre le disque de pression (3) et le corps d'entraînement (1) et comprend des éléments de transfert de pression (6) rigides, dans lequel
- dans le cas d'un entraînement, qui est caractérisé d'abord par une rotation relative entre le corps d'entraînement (1) fixe dans l'axe de rotation et le corps entraîné (2) également fixe dans l'axe de rotation dans la direction d'entraînement (A), lesdits éléments de transfert de pression (6) sont contraints en pression, moyennant quoi leur centre de gravité (M) se déplace à l'encontre de la face arrière du disque de pression (3), sur laquelle ils exercent alors une pression, résultant en un déplacement dans l'axe de rotation du disque de pression (3) dans la direction (i) du corps d'entraînement (1) ou (ii) du corps entraîné (2), ce qui conduit à une liaison par friction et/ou par complémentarité de forme entre une première surface de transmission de couple (4A) disposée sur le disque de pression (3) et une seconde surface de transmission de couple (4B) disposée (i) sur le corps d'entraînement (1) ou (ii) sur le corps entraîné (2), moyennant quoi la rotation relative devient nulle, et, la contrainte de pression étant maintenue, le couple d'entraînement est transmis du corps d'entraînement (1) au disque de pression (3) et de celui-ci au corps entraîné (2), alors que
- dans le cas d'une roue libre, qui est **caractérisée par** une rotation relative durable entre le corps d'entraînement (1) fixe dans l'axe de rotation et le corps entraîné (2) également fixe dans l'axe de rotation inversement à la direction d'entraînement (A), lesdits éléments de transfert de pression (6) sont déchargés de la pression, moyennant quoi leur centre de gravité (M) s'éloigne de la face arrière du disque de pression (3), de sorte qu'ils n'exercent pas de pression sur celui-ci, résultant en un éloignement dans l'axe de rotation du disque de pression (3) du (i) corps d'entraînement (1) ou (ii) corps entraîné (2), ce qui conduit à une séparation d'une liaison entre la première et la seconde surface de transmission de couple (4A, 4B), de sorte qu'aucun couple d'entraînement n'est transmis du corps d'entraînement (1) au corps entraîné (2), mais que le corps d'entraînement et le corps entraîné (1, 2) tournent librement l'un à l'inverse de l'autre.

9. Procédé selon la revendication 8, dans lequel le déplacement des centres de gravité (M) des éléments de transfert de pression (6) est provoqué par le fait que les éléments de transfert de pression (6) présentent une forme allongée et sont fixés dans la direction d'entraînement (A) aussi bien sur la face arrière du disque de pression (3) que sur le composant (1 ; 2) faisant face à cette face arrière ainsi qu'inclinés de telle manière qu'ils se redressent en cas de contrainte de pression et exigent plus d'espace dans la direction de l'axe de rotation.
